# EUROPÄISCHE PATENTSCHRIFT

(11) **EP 1 380 021 B1**
(45) Veröffentlichungstag und Bekanntmachung des Hinweises auf die Patenterteilung: **01.09.2004**
(21) Anmeldenummer: 02708235.3
(22) Anmeldetag: 13.02.2002
(51) Int. Cl.: G08G 1/0968, G01C 21/20, G01C 21/36

(54) **VERFAHREN ZUM BETRIEB EINES NAVIGATIONSSYSTEMS FUR EIN FAHRZEUG**
METHOD FOR OPERATING A NAVIGATION SYSTEM FOR A VEHICLE
PROCEDE POUR ACTIONNER UN SYSTEME DE NAVIGATION POUR VEHICULE

(30) Priorität: 06.04.2001 DE 10117395
(43) Veröffentlichungstag der Anmeldung: 14.01.2004
(73) Patentinhaber: ROBERT BOSCH GMBH, 70442 Stuttgart (DE)
(72) Erfinder: FRIEDRICHS, Arne, 38114 Braunschweig (DE); DRAEGER, Gerd, 38102 Braunschweig (DE); SKWAREK, Volker, 31162 Bad Salzdetfurth (DE)
(86) Internationale Anmeldenummer: PCT/DE2002/000501
(87) Internationale Veröffentlichungsnummer: WO 2002/082404

(56) Entgegenhaltungen:
- EP-A- 0 629 840

## Beschreibung

### Technisches Gebiet

Die Erfindung betrifft ein Verfahren zum Betrieb eines Navigationssystems für ein Fahrzeug, für ein Kraftfahrzeug, bei dem von einem Ortungssystem Daten zur geographischen Position ermittelt und an eine Einrichtung zur elektronischen Datenverarbeitung mit Zugriff auf eine Datenbank und eine digitale Straßenkarte übertragen werden und anhand dieser Daten der Standort des Fahrzeuges auf der digitalen Straßenkarte bestimmt wird und dem Fahrer des Fahrzeuges akustisch und/oder visuell Zielführungsanweisungen ausgegeben werden. Solch ein Verfahren ist aus der EP-A-629 840 bekannt.

### Stand der Technik

Navigationssysteme für Fahrzeuge, insbesondere Kraftfahrzeuge, sowie Verfahren zum Betreiben derartiger Mavigationssysteme sind bekannt. Diese dienen dazu, die aktuelle geographische Position des Fahrzeuges zu bestimmen und in Abhängigkeit eines vorgebbaren, zu errelchenden Zielpunktes die günstigste Fahrtroute zu berechnen und dem Fahrer Anweisungen zur Fahrtroute zu geben.

Die bekannten Navigationssysteme benötigen Informationen, die für die Bestimmung des aktuellen Standortes des Fahrzeuges und die Berechnung der Fahrtroute notwendig sind. Hierzu gehören insbesondere Straßenverläufe, Abbiegebedingungen und dergleichen. Diese Daten werden in Form einer Datenbasis auf Speichern, beispielsweise einer CD-ROM, im Fahrzeug vorgehalten. Die Datenbasis umfasst hierzu beispielsweise eine so genannte digitale Karte, die Wegepunkte und/oder Entscheidungspunkte der möglichen Routen enthält.

Ferner ist ein Ortungssystem notwendig, das die aktuelle geographische Position des Fahrzeuges feststellt. Bekannt ist hierzu beispielsweise das satellitengestützte Global Positioning System (GPS). Eine Einrichtung zur elektronischen Datenverarbeitung verarbeitet die vom Ortungssystem gelieferten Positionsdaten mit den in der digitalen Straßenkarte gespeicherten Daten und bestimmt die aktuelle Position des Fahrzeuges. Entsprechend dem gewählten Zieipunkt kann nunmehr durch die Einrichtung zur elektronischen Datenverarbeitung anhand von Wegepunkten und/oder Entscheidungspunkten auf einer ausgewählten günstigsten Fahrtroute dem Fahrer visuell und/oder akustisch eine Zielführungsinformation gegeben werden.

Diese als so genannte "Map-Matching"-Verfahren bekannten Verfahren zum Betrieb eines Navigationssystems vergleichen die informationen verschiedener Sensoren zur Bestimmung der Position des Fahrzeuges (beispielsweise über GPS), der Fahrtrichtung des Fahrzeuges (beispielsweise über Kreiselkompass) und einer Fahrgeschwindigkeit des Fahrzeuges (beispielsweise über Geschwindigkeitssensoren) mit den Informationen der abgespeicherten digitalen Karte. Da die Sensoren in der Regel mit Messfehlern behaftet sind, werden diese mit Hilfe der Positions- und Richtungsinformationen der digitalen Karte verglichen und korrigiert. Zur Korrektur der Sensoren ist daher der Inhalt einer digitalen Karte möglichst hoher Auflösung (Feingeometrie oder Shape-Points) notwendig.

Werden jedoch beispielsweise digitale Karten eingesetzt, in denen diese Feingeometrie-Informationen nicht oder nur zum Teil vorhanden sind, können die bekannten Verfahren zum Betreiben eines Navigationssystems nicht eingesetzt werden. Digitale Karten ohne Feingeometrie-Informationen werden bei so genannten Offboard-Navigationssystemen eingesetzt, bei denen die entsprechenden informationen von einer Dienstezentrale über eine Übertragungsstrecke den Fahrzeugen übertragen werden. Da hier nur begrenzte Übertragungsraten zur Verfügung stehen, werden die Daten auf ein notwendiges Minimum reduziert. Bekannt ist, bei diesen Offboard-Navigationssystemen den Fahrzeugen die Entscheldungspunkte einer günstigsten Fahrtroute zu übermitteln.

### Darstellung der Erfindung

### Aufgabe, Lösung, Vorteile

Der Erfindung liegt die Aufgabe zugrunde, ein Verfahren zum Betrieb eines Navigationssystems für ein Fahrzeug, insbesondere ein Kraftfahrzeug, und Navigationssystem zu verbessern.

Diese Aufgabe wird durch die in den Ansprüchen 1 und 10 angegeben Maßnahmen bzw. Merkmalen gelöst.

Das erfindungsgemäße Verfahren zum Betrieb eines Naviationssystems mit den im Anspruch 1 genannten Merkmalen bietet den Vorteil, dass auf Basis weniger Informationen einer digitalen Karte und Positionsinformationen des Fahrzeuges zeitkritische Zielführungsanweisungen an einen Fahrzeugführer ausgegeben werden können. Dadurch, dass permanent ein momentaner Abstand des Fahrzeuges von einem ersten Entscheidungspunkt einer durch das Fahrzeug zu befahrenden Route Überprüft wird und bei Überschreiten eines Mindestabstandes des Fahrzeuges nach Passieren des ersten Entscheidungspunktes ein nächster Entscheidungspunkt festgelegt wird, wird vorteilhaft möglich, Sensorinformationen eines Ortungssystems mit den Informationen der digitalen Karte, das heißt mit den Entscheidungspunkten der digitalen Karte, derart miteinander zu verknüpfen, dass neben einer exakten Zielführungsanweisung gleichzeitig eine Überprüfung der Fahrtroute möglich ist. Insbesondere dadurch, dass das Verfahren auf Basis von Abstandsüberprüfungen, insbesondere auf Änderungen eines Abstandes zu Entscheidungspunkten, basiert, wird in einfacher Weise eine Verarbeitung der Daten möglich, so dass das Navigationssystem insgesamt mit geringem Aufwand betrieben werden kann.

In bevorzugter Ausgestaltung der Erfindung ist vorgesehen, dass die erhaltenen Abstandsinformationen beziehungsweise erhaltenen Informationen über die Änderung eines Abstandes zu Entscheidungspunkten für eine Überprüfung der Einhaltung einer vorgegebenen günstigsten Fahrtroute genutzt werden. Hierdurch wird vorteilhaft möglich, zusätzliche Informationen an den Fahrzeugführer auszugeben, dass er die günstigste Route zum Erreichen des von ihm vorgegebenen Zielpunktes verlassen hat. Ferner wird hierdurch vorteilhaft möglich, entsprechend einer vom Fahrzeugführer vorgenommenen Routenänderung eine neue günstigste Fahrtroute zu ermitteln und diese den weiteren Zielführungsanweisungen zugrunde zu legen.

Das erfindungsgemäße Navigationssystem mit den im Anspruch 8 genannten Merkmalen bietet den Vorteil, dass dieses einen einfachen Aufbau besitzt und dennoch in der Lage ist, zeitkritische Zielführungsanweisungen auszugeben.

Weitere bevorzugte Ausgestaltungen der Erfindung ergeben sich aus den übrigen in den Unteransprüchen genannten Merkmalen.

### Kurze Beschreibung der Zeichnungen

Die Erfindung wird nachfolgend in einem Ausführungsbeispiel anhand der zugehörigen Zeichnungen näher erläutert. Es zeigen:
- Figur 1: ein Blockschaltbild des erfindungsgemäßen Navigationssystems;
- Figur 2: den Ausschnitt aus einer Fahrtroute und
- Figur 3: ein Blockschaltbild des Verfahrens zum Betreiben eines Navigationssystems.

### Beschreibung des Ausführungsbeispiels

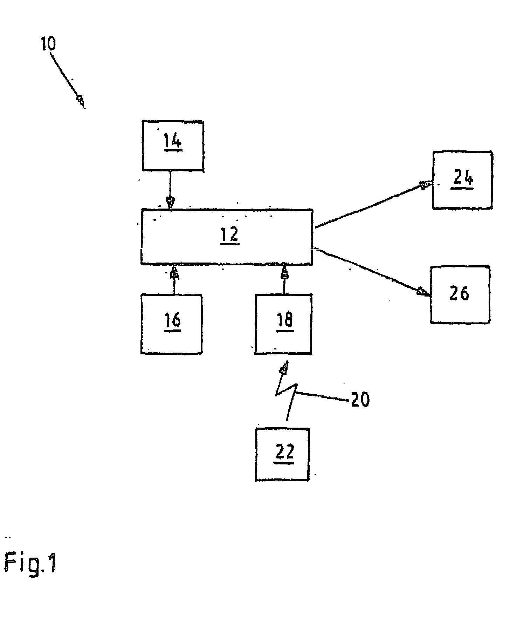

Figur 1 zeigt schematisch ein insgesamt mit 10 bezeichnetes Navigationssystem für ein Kraftfahrzeug. Das Navigationssystem 10 umfasst eine Einrichtung 12 zur elektronischen Datenverarbeitung, die im Einzeinen nicht dargestellte Mikroprozessoren, Speicherelemente oder dergleichen aufweisen kann. Ferner umfasst das Navigationssystem 10 ein Ortungssystem 14, beispielsweise ein an sich bekanntes Global Positioning System (GPS). Der Einrichtung 12 ist ein Massenspeicher 16, beispielsweise eine CD-ROM, und/oder eine Empfangseinrichtung 18 zugeordnet. Die Empfangseinrichtung 18 kommuniziert über eine Übertragungsstrecke 20 mit einer übergeordneten, stationären Dienstezentrale 22. Über den Massenspeicher 16 und/oder die Empfangseinrichtung 18 kann der Einrichtung 12 eine digitale Straßenkarte übermittelt werden. Je nach Ausführungsform kann das Navigationssystem 10 den Massenspeicher 16 und die Empfangseinrichtung 18 oder lediglich den Massenspeicher 16 oder die Empfangseinrichtung 18 aufweisen. Die Bereitstellung digitaler Straßenkarten für das Navigationssystem 10 ist allgemein bekannt, so dass hierauf im Rahmen der Beschreibung nicht näher eingegangen werden soll.

Das Navigationssystem 10 umfasst ferner eine visuelle Ausgabeeinrichtung 24, beispielsweise ein Display oder dergleichen, und/oder eine akustische Ausgabeeinrichtung 26, beispielsweise ein Lautsprecher oder dergleichen.

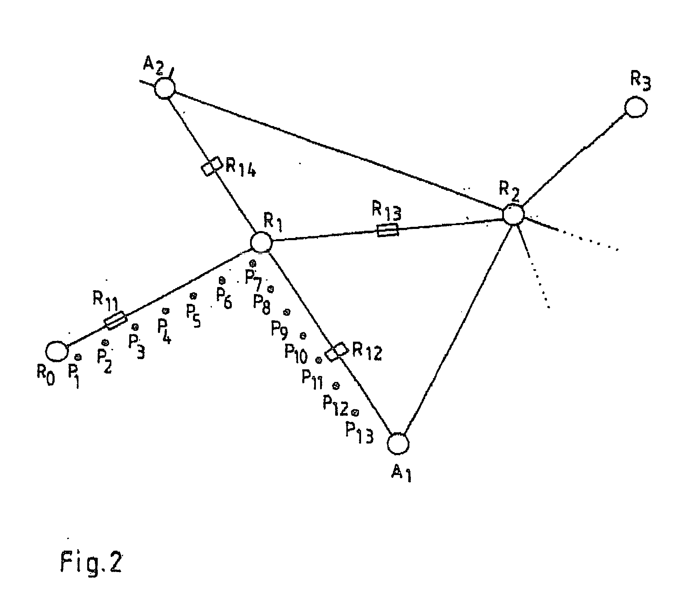

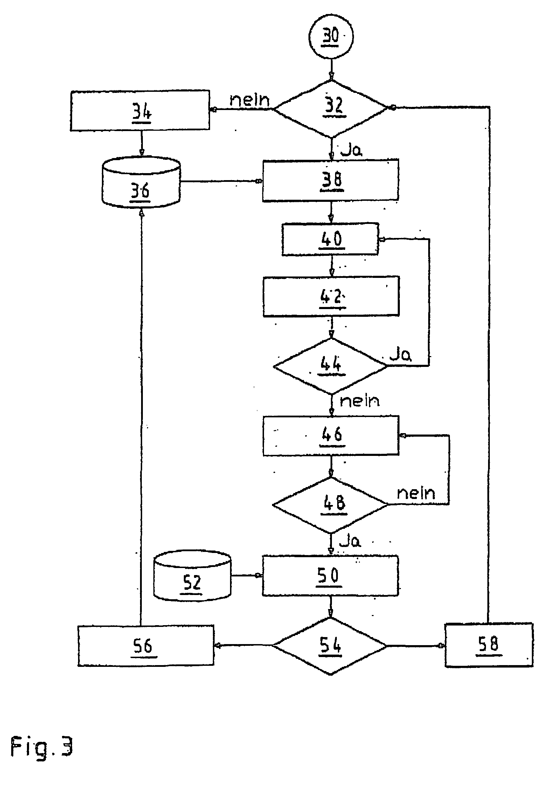

Das erfindungsgemäße Verfahren zum Betreiben des Navigationssystems 10 wird nachfolgend anhand der Figuren 2 und 3 verdeutlicht.

Figur 2 zeigt den Ausschnitt aus einer Route für ein Fahrzeug. Hierbei sei angenommen, ein Fahrzeug möchte vom Wegpunkt R₀ zu seinem Endziel (Zielpunkt), dem Wegpunkt R₃, gelangen. Hierbei ergibt sich als günstigste Fahrtroute die Route über die Wegpunkte R₁ und R₂ zu R₃. Diese Informationen werden dem Navigationssystem 10 entweder über den Massenspeicher 16 oder über das übergeordnete Datensystem 22 und die Empfangseinrichtung 18 vorgegeben. Das Navigationssystem 10 erhält gleichzeitig Kenntnis von an der günstigsten Route anliegenden weiteren Wegpunkten, die als Ausweichwegpunkte A₁ und A₂ zum Erreichen des geplanten Endzieles R₉ möglich sind (Routenkorridor). Die Wegpunkte R₁, R₂ sowie A₁ und A₂ sind jeweils Entscheidungspunkte, an denen beispielsweise eine Fahrtrichtungsänderung durch Abbiegen möglich ist. Um jeden Wegpunkt sind Hilfswegpunkte definiert, von denen hier die dem Wegpunkt R zugeordneten Hilfswegpunkte R₁₁, R₁₂, R₁₃ und R₁₄ dargestellt sind. Diese sind keine Entscheidungspunkte.

Es wird nunmehr angenommen, das Fahrzeug nähert sich vom Wegpunkt R₀ kommend dem Wegpunkt R₁ an. Hierbei passiert das Fahrzeug die Positionspunkte P₁, P₂, P₃, P₄, P₅, P₆ und P₇. Die Positionspunkte P entsprechen den vom Ortungssystem 14 festgestellten momentanen Positionen des Fahrzeuges.

Während der Annäherung des Fahrzeuges an den Wegpunkt R₁ läuft das in dem Blockschaltbild in Figur 3 dargestellte Verfahren ab. Ausgehend von einem Start 30 an, startet eine Abfrage 32, die beinhaltet, ob der nächste anzufahrende Wegpunkt, gemäß dem Beispiel der Wegpunkt R₁, bekannt ist. Ist der nächste Wegpunkt R₁ nicht bekannt, erfolgt eine Suche 34, in deren Ergebnis eine Festlegung 36 des nächsten Wegpunktes erfolgt. Ist der nächste Wegpunkt R₁ bekannt beziehungsweise ist dieser festgelegt, erfolgt eine Ermittlung 38 des momentanen Abstandes (nachfolgend auch Distanz d) des Fahrzeuges zum nächsten Wegpunkt R₁. Im Beispiel angenommen, das Fahrzeug befindet sich an dem Positionspunkt P₄, beträgt der momentane Abstand d_{P4} zum Wegpunkt R1. Dieser momentane Abstand wird in einem Schritt 40 als dₘᵢₙ zwischengespeichert. Durch weitere Annäherung des Fahrzeuges an den Wegpunkt R₁ wird als nächstes der Positionspunkt P₅ passiert. Am Positionspunkt P₅ wird der Abstand (Distanz) zum Wegpunkt R₁ in einem Schritt 42 erneut ermittelt. Anschließend erfolgt eine Abfrage 44, ob der neue Abstand d_{P5} kleiner ist als der im Schritt 40 zwischengespeicherte Abstand dₘᵢₙ. Ist der neue Abstand d_{P5} kleiner, wird dieser als neuer Wert dₘᵢₙ zwischengespeichert. Während der Annäherung des Fahrzeuges an den Wegpunkt R₁ wird zu jedem der Positionspunkte die Abfrage 44 wiederholt, bis beim Positionspunkt P₇ der Abstand dₘᵢₙ zum Wegpunkt R₁ nicht mehr unterschritten werden kann.

Diese Ermittlung beziehungsweise Überwachung der Annäherung des Fahrzeuges an den Wegpunkt R₁ kann gemäß einem ersten Aspekt der Erfindung dazu genutzt werden, um rechtzeitig, das heißt rechtzeitig vor Erreichen des Wegpunktes R₁, eine Zielführuhgsinformation an den Fahrer visuell und/oder akustisch auszugeben. So kann beispielsweise zu den Positionspunkten P₅ und/oder P₆ und/oder P₇ die Zielführungsanweisung - gemäß der angenommenen günstigsten Route - erfolgen, am Wegpunkt R₁ geradeaus zu fahren.

Folgt der Fahrzeugführer dieser Zielführungsanweisung nicht und biegt gemäß dem dargestellten Beispiel in Richtung des Ausweichwegpunktes A₁ ab, passiert das Fahrzeug aufeinander folgend die Positionspunkte P₈, P₉, P₁₀, P₁₁, P₁₂, P₁₃. Gemäß der Abfrage 44 wird zu jedem Positionspunkt ermittelt, ob der momentane Abstand d zum Wegpunkt R₁ kleiner oder größer wird als der zuvor zwischengespeicherte Abstand d_{min.} Bei Entfernen vom Wegpunkt R₁, beispielsweise beim Passieren des Positionspunktes P₈, wird der momentane Abstand d zum Wegpunkt R₁ größer, da der minimale mögliche Abstand im Positionspunkt P₇, der mit dem Wegpunkt R₁ zusammenfällt, gegeben ist. Hierauf wird in einem Schritt 46 der momentane - nun größer werdende - Abstand d zum Wegpunkt R₁ ermittelt. In einer sich anschließenden Abfrage 48 wird der momentane Abstand d mit einem Entfernungsschwellwert e_{F} verglichen, ist der momentane Abstand d kleiner als der Entfernungsschwellwert e_{F}, wird beim Passieren des jeweils nächsten Positionspunktes - gemäß dem Beispiel der Positionspunkte P₉, P₁₀, P₁₁ - der momentane Abstand d zum Wegpunkt R₁ jeweils neu ermittelt (Schritt 46) und jeweils erneut die Abfrage 48 gestartet. Es sei angenommen, der Entfernungsschwellwert e_{F} entspricht dem Abstand d des Positionspunktes P₁₂ und somit dem Hilfswegpunkt R₁₂ zum Wegpunkt R₁.

Wird der Entfernungsschwellwert e_{F} erreicht, beispielsweise bei dem Positionspunkt P₁₂, wird in einem nächsten Schritt 50 ein Fahrtrichtungsabgleich durchgeführt. Da die bloße Abstandsvergrößerung vom Wegpunkt R₁ noch kein Kriterium für die Fahrtrichtung ist (der Abstand d bis zum Entfernungsschwellwert e_{F} vergrößert sich auch bei angenommener Fahrt in Richtung des Wegpunktes R₂ beziehungsweise des Ausweichwegpunktes A₂), wird mittels der Richtungsinformationen von Richtungssensoren, beispielsweise GPS oder Kreiselkompass, die Fahrtrichtung des Fahrzeuges ermittelt. Hierbei werden aus einem Zwischenspeicher 52 die an den Wegpunkt R₁ angrenzenden Wegpunkte R₀, R₂, A₁ und A₂ herangezogen und über eine Abfrage 54 festgestellt, zu welchen der an den Wegpunkt R₁ angrenzenden Wegpunkte die kleinste Richtungsdifferenz besteht. Dieser Wegpunkt, gemäß dem Beispiel der Wegpunkt A₁, wird in einem Auswahlschritt 56 als nächster Wegpunkt bestimmt (Schritt 36), so dass bei Annäherung des Fahrzeuges an den dann neuen Wegpunkt A₁ das erfindungsgemäße Verfahren zum Betrieb des Navigationssystems 10 erneut abläuft.

Ergibt die Abfrage 54, dass der nächste Wegpunkt nicht in dem zuvor ausgewählten Routenkorridor liegt - der sich durch die Eingabe des Zielpunktes R₃ durch den Fahrzeugführer definiert - wird in einem Schritt 58 entweder der Massenspeicher 16 oder bei Offboard-Systemen die übergeordnete Dienstezentrale 22 angefragt, ob der nächste Wegpunkt bekannt ist. Die Routine startet dann neu bei der Abfrage 32.

Anhand der beispielhaften Erläuterung wird deutlich, dass durch lnformationen eines Ortungssystems und Informationen einer digitalen Karte - wobei die digitale Karte beispielsweise nur die Entscheidungspunkte einer Route enthalten muss - diese so miteinander verknüpft sein können, dass akustische und/oder optische Zielführungsanweisungen zeitkritisch ausgegeben werden können. Ferner kann nach Passieren eines Entscheidungspunktes (gemäß Beispiel Wegpunkt R₁) der nächste Entscheidungspunkt bestimmt werden. Hierbei muss der nächste Entscheidungspunkt nicht derjenige sein, der durch eine günstigste Routenführung vorgegeben ist. Diese Informationen können neben der Ausgabe von Zielführungsanweisungen auch dazu genutzt werden, dass die Kenntnis über die eingeschlagene Fahrtrichtung nach einem Entscheidungspunkt zur Ermittlung der Richtigkeit der tatsächlich gefahrenen Route dient. Es sind also Abweichungen von der vorgegeben günstigsten Fahrtroute möglich. Diese Kenntnis kann entweder dazu genutzt werden, dem Fahrzeugführer entsprechende Informationen zu geben oder in Abhängigkeit der Ist-Abweichung von der günstigsten Fahrtroute eine neue günstigste Fahrtroute zu bestimmen.

Besonders geeignet ist das erfindungsgemaße Verfahren zum Betrieb eines Navigationssystems in so genannten Offboard-Navigationssystemen, da hier die ermittelte günstigste Route oder Teilroute. In einer Dienstezentrale erstellt und zum Fahrzeug beziehungsweise Navigationssystem 10 übertragen wird. Diese digitalen Karten oder Routen zeichnen sich dadurch aus, dass sie mit sehr wenigen Dateninformationen beschrieben werden, so dass Übertragungskapazitäten und somit Übertragungskosten reduziert werden können. Letztendlich reichen die reduzierten Dateninformationen, die beispielsweise die Entscheidungspunkte der Route und die an den jeweiligen Entscheidungspunkten möglichen Zielführungsanweisungen enthalten, aus.

## Patentansprüche

1. Verfahren zum Betrieb eines Navigationssystems (10) für ein Fahrzeug, insbesondere für ein Kraftfahrzeug, bei dem von einem Ortungssystem (14) Daten zur geographischen Position des Fahrzeugs ermittelt und an eine Einrichtung (12) zur elektronischen Datenverarbeitung mit Zugriff auf eine Datenbasis (16, 18) und eine digitale Straßenkarte übertragen werden und anhand dieser Daten der Standort des Fahrzeuges auf der digitalen Straßenkarte bestimmt wird und dem Fahrer des Fahrzeuges akustisch und/oder visuell Zielführungsanweisungen ausgegeben werden, **dadurch gekennzeichnet, dass** permanent ein momentaner Abstand (d) des Fahrzeuges von einem ersten Entscheidungspunkt (R₁) einer durch das Fahrzeug zu befahrenden Route überprüft wird und bei Überschreiten eines Mindestabstandes (dₘᵢₙ) des Fahrzeuges nach Passieren des Entscheidungspunkies (R₁) ein nächster Entscheidungspunkt (A₁) festgelegt wird.

2. Verfahren nach Anspruch 1, **dadurch gekennzeichnet, dass** der zu überschreitende Mindestabstand (dₘᵢₙ) durch einen Entfernungsschwellwert (e_{F}) definiert wird.

3. Verfahren nach einem der vorhergehenden Ansprüche, **dadurch gekennzeichnet, dass** der Entfernungsschwellwert (e_{F}) durch um einen Entscheidungspunkt (R₁) definierte Hilfswegpunkte (R₁₂) vorgegeben wird.

4. Verfahren nach einem der vorhergehenden Ansprüche, **dadurch gekennzeichnet, dass** bei Erreichen des Entfernungsschwellwertes (e_{F}) ein Fahrtrichtungsabgleich durchgeführt wird.

5. Verfahren nach einem der vorhergehenden Ansprüche, **dadurch gekennzeichnet, dass** ein Entfernungsschwellwert (e_{F}) durch die Fahrzeuggeschwindigkeit oder andere Fahrzeugzustandsgrößen (z. B. Beschleunigung) variieren kann.

6. Verfahren nach Anspruch 4 oder 5, **dadurch gekennzeichnet, dass** eine kleinste Richtungsdifferenz des angefahrenen, den Entfernungsschwellwert (e_{F}) repräsentierenden Positionspunkt zu den dem Entscheidungspunkt (R₁) benachbarten Wegpunkten (R₀, R₂, A₁, A₂) ermittelt wird.

7. Verfahren nach Anspruch 5 oder 6, **dadurch gekennzeichnet, dass** der die kleinste Richtungsdifferenz aufweisende Wegpunkt als nächster Entscheidungspunkt (A₁) festgelegt wird.

8. Verfahren nach einem der vorhergehenden Ansprüche, **dadurch gekennzeichnet, dass** der mit der zum Fahrzeug kleinsten Distanz liegende Wegpunkt als nächster Entscheidungspunkt festgelegt wird.

9. Verfahren nach einem der vorhergehenden Ansprüche, **dadurch gekennzeichnet, dass** bei Erreichen eines vorgebbaren Mindestabstandes (dₘᵢₙ) zum nächsten Entscheidungspunkt (R₁) die Zielführungsanweisung ausgegeben wird.

10. Navigationssystem (10) für ein Fahrzeug, insbesondere ein Kraftfahrzeug, mit einem Ortungssystem (14), einer Einrichtung (12) zur elektronischen Datenverarbeitung, einer eine digitale Straßenkarte aufweisende Datenbasis (16, 18) und wenigstens einer Ausgabeeinrichtung (24, 26) zur Ausgabe von Zielführungsanweisungen, **gekennzeichnet durch** Mittel zur Bestimmung, eines Momentanabstandes zu einem Entscheidungspunkt (R₁) einer Route, **durch** Mittel zum Vergleich des Momentanabstandes mit einem Mindestabstand (dₘᵢₙ) und Mittel zum Festlegen eines neuen Entscheidungspunktes (A₁) der Route bei Überschreiten des Mindestabstandes (dₘᵢₙ).

## Claims

1. Method for operating a navigation system (10) for a vehicle, in particular for a motor vehicle, in which data relating to the geographic position of the vehicle is determined by a locating system (14) and transmitted to a device (12) for electronic data processing with access to a database (16, 18) and a digital roadmap, and this data is used to determine the location of the vehicle along the digital road map, and the driver of the vehicle is issued with routing instructions acoustically and/or visually, **characterized in that** an instantaneous distance (d) between the vehicle and a first decision point (R₁) of the route which is to be travelled along by the vehicle is continuously checked and when a minimum distance (dₘᵢₙ) of the vehicle is exceeded after the decision point (R₁). is passed, the subsequent decision point (A₁) is defined.

2. Method according to Claim 1, **characterized in that** the minimum distance (dₘᵢₙ) to be exceeded is defined by a distance threshold value (e_{F}).

3. Method according to one of the preceding claims, **characterized in that** the distance threshold value (e_{F}) is predefined by auxiliary route points (R₁₂) which are defined about a decision point (R₁).

4. Method according to one of the preceding claims, **characterized in that** a travel direction reconciliation is carried out when the distance threshold value (e_{F}) is reached.

5. Method according to one of the preceding claims, **characterized in that** a distance threshold value (e_{F}) can vary by the vehicle speed or other vehicle state variables (for example acceleration).

6. Method according to Claim 4 or 5, **characterized in that** a smallest directional difference is determined between the aimed-at position point representing the distance threshold value (e_{F}) and the route points (R₀, R₂, A₁, A₂) which are adjacent to the decision point (R₁).

7. Method according to Claim 5 or 6, **characterized in that** the route point which has the smallest directional difference is defined as the next decision point (A₁).

8. Method according to one of the preceding claims, **characterized in that** the route point which is at the smallest distance from the vehicle is defined as the next decision point.

9. Method according to one of the preceding claims, **characterized in that**, when a predefinable minimum distance (dₘᵢₙ) from the next decision point (R₁) is reached, the routing instruction is issued.

10. Navigation system (10) for a vehicle, in particular a motor vehicle, having a locating system (14), a device (12) for electronic data processing, a database (16, 18) which has a digital roadmap, and at least one output device (24, 26) for outputting routing instructions, **characterized by** means for determining an instantaneous distance from a decision point (R₁) of a route, by means for comparing the instantaneous distance with a minimum distance (dₘᵢₙ) and means for defining a new decision point (A₁) of the route when the minimum distance (dₘᵢₙ) is exceeded.

## Revendications

1. Procédé pour actionner un système de navigation (10) pour un véhicule, en particulier pour un véhicule automobile dans lequel, par un système de localisation (14), des données sur la position géographique du véhicule sont déterminées et transmises à un dispositif (12) de traitement électronique de données avec accès à une base de données (16, 18) et à une carte routière numérique et, au moyen de ces données, l'emplacement du véhicule est déterminé sur la carte routière numérique et des instructions de guidage vers le but sont émises de manière acoustique et/ou visuelle au conducteur du véhicule,
**caractérisé en ce qu'**
une distance momentanée (d) du véhicule par rapport à un premier point de décision (R₁) de l'itinéraire à parcourir par le véhicule est vérifiée de manière permanente et, en cas de dépassement d'une distance minimale (dₘᵢₙ) du véhicule après passage du point de décision (R₁), un point de décision (A₁) suivant est fixé.

2. Procédé selon la revendication 1,
**caractérisé en ce que**
la distance minimale (dₘᵢₙ) à dépasser est définie par une valeur seuil d'éloignement (e_{F}).

3. Procédé selon l'une des revendications précédentes,
**caractérisé en ce que**
la valeur seuil d'éloignement (e_{F}) est prédéterminée par des points de trajet accessoire (R₁₂) définis autour d'un point de décision (R₁).

4. Procédé selon l'une des revendications précédentes,
**caractérisé en ce que**
lorsque la valeur seuil d'éloignement (e_{F}) est atteinte, une compensation de la direction de marche est effectuée.

5. Procédé selon l'une des revendications précédentes,
**caractérisé en ce qu'**
une valeur seuil d'éloignement (e_{F}) peut varier sous l'effet de la vitesse du véhicule ou d'autres grandeurs d'état du véhicule (par exemple l'accélération).

6. Procédé selon l'une des revendications précédentes,
**caractérisé en ce qu'**
une différence la plus petite de direction du point de position représentant la valeur seuil d'éloignement (e_{F}) parcourue par rapport aux points du trajet (R₀, R₂, A₁, A₂) adjacents au point de décision (R₁) est calculée.

7. Procédé selon la revendication 5 ou 6,
**caractérisé en ce que**
le point du trajet présentant la différence la plus petite de direction est défini comme prochain point de décision (A₁).

8. Procédé selon l'une des revendications précédentes,
**caractérisé en ce que**
le point du trajet présentant la distance la plus petite par rapport au véhicule est défini comme prochain point de décision.

9. Procédé selon l'une des revendications précédentes,
**caractérisé en ce que**
lorsqu'une distance minimale (dₘᵢₙ) prédéterminée par rapport au prochain point de décision (R₁) est atteinte, l'instruction de guidage vers le but est émise.

10. Système de navigation (10) pour un véhicule, en particulier pour un véhicule automobile, comportant un système de localisation (14), un dispositif (12) de traitement électronique des données, une base de données (16, 18) présentant une carte routière numérique, et au moins un dispositif de sortie (24, 26) pour l'émission des instructions de guidage vers le but,
**caractérisé par**
des moyens de détermination d'une distance momentanée par rapport à un point de décision (R₁) d'un itinéraire, par des moyens de comparaison de la distance momentanée avec une distance minimale (dₘᵢₙ) et des moyens de définition d'un nouveau point de décision (A₁) de l'itinéraire en cas de dépassement de la distance minimale (dₘᵢₙ).
